# EUROPEAN PATENT APPLICATION

(11) **EP 4 383 547 A1**
(43) Date of publication of application: **12.06.2024**
(21) Application number: 22871805.2
(22) Date of filing: 07.09.2022
(51) Int. Cl.: H02M 7/04

(54) **AC/DC CONVERTER AND CHARGING DEVICE**

(30) Priority: 26.09.2021 CN 202111129282
(71) Applicant: Huawei Digital Power Technologies Co., Ltd., Shenzhen, Guangdong 518043 (CN)
(72) Inventor: LIU, Yaping, Shenzhen, Guangdong 518043 (CN); CHEN, Jiansheng, Shenzhen, Guangdong 518043 (CN); LIU, Yang, Shenzhen, Guangdong 518043 (CN); JIANG, Zhenting, Shenzhen, Guangdong 518043 (CN)
(74) Representative: Isarpatent
(86) International application number: PCT/CN2022/117474
(87) International publication number: WO 2023/045756

(57) **Abstract**

This application provides an AC/DC converter and a charging apparatus. The AC/DC converter includes a circuit of at least one phase. In a circuit of each phase, one end of an inductor is coupled to an alternating current power supply, and the other end of the inductor is coupled to one end of a first winding and one end of a second winding; the other end of the first winding is coupled to a winding connection end of a first switching unit, and the other end of the second winding is coupled to a winding connection end of a second switching unit; a bus connection end of the first switching unit is coupled to a bus of the AC/DC converter through at least two first rectifier units, a bus connection end of the second switching unit is coupled to the bus of the AC/DC converter through at least two second rectifier units; and at least two groups of switching circuits are included between the winding connection end of any one of the switching units and a ground cable connection end of the switching unit, where each group of switching circuits includes a diode and a controllable switch connected in series to the diode. Implementation of this application can reduce costs and improve conversion efficiency.

## Description

This application claims priority to Chinese Patent Application No. 202111129282.1, filed with the China National Intellectual Property Administration on September 26, 2021 and entitled "AC/DC CONVERTER AND CHARGING APPARATUS", which is incorporated herein by reference in its entirety.

### TECHNICAL FIELD

This application relates to the field of power supply technologies, and in particular, to an AC/DC converter and a charging apparatus.

### BACKGROUND

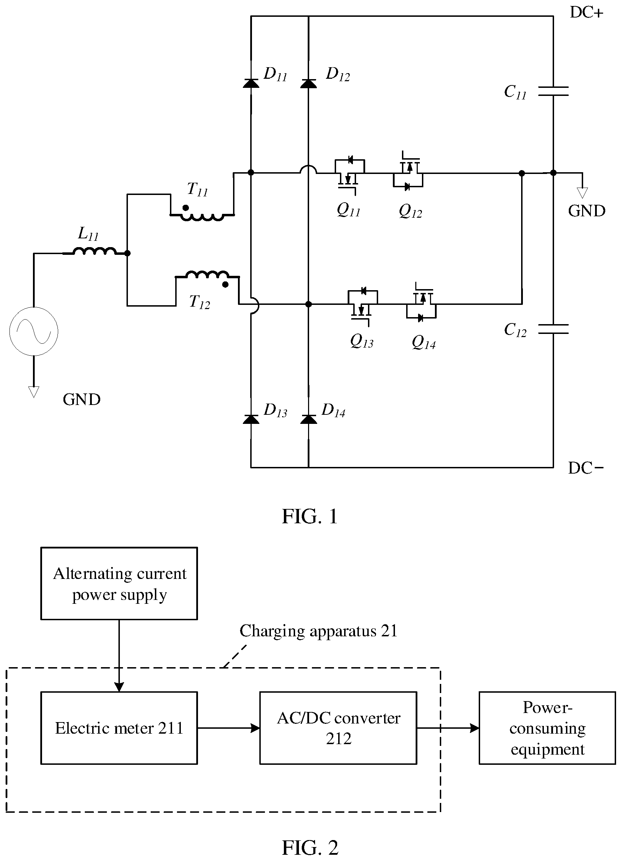

An AC/DC converter (Alternating Current/Direct Current converter) is a voltage converter that converts an input alternating current into an output direct current. An AC/DC converter shown in FIG. 1 is used as an example. After flowing through an inductor *L*₁₁, a current flows through a winding *T*₁₁ and a winding *T*₁₂ separately. When a switch tube *Q*₁₁ and a switch tube *Q*₁₂ are on, regardless of whether an alternating current power supply is in a positive half cycle or a negative half cycle, both the inductor *L*₁₁ and the winding *T*₁₁ form a closed loop with the switch tube *Q*₁₁ and the switch tube *Q*₁₂. A rectifier diode *D*₁₁ needs to withstand a voltage at both ends of a capacitor *C*₁₁, and a rectifier diode *D*₁₃ needs to withstand a voltage at both ends of a capacitor *C*₁₂. Similarly, when a switch tube *Q*₁₃ and a switch tube *Q*₁₄ are on, regardless of whether an alternating current power supply is in a positive half cycle or a negative half cycle, both the inductor *L*₁₁ and the winding *T*₁₂ form a closed loop with the switch tube *Q*₁₃ and the switch tube *Q*₁₄. A rectifier diode *D*₁₂ needs to withstand the voltage at both ends of the capacitor *C*₁₁, and a rectifier diode *D*₁₄ needs to withstand the voltage at both ends of the capacitor *C*₁₂. In other words, in an AC/DC converter in a current technology, a rectifier diode needs to withstand half of an output voltage of the AC/DC converter. In this case, the AC/DC converter in the current technology has a high requirement on a rated voltage of the rectifier diode. Especially in a high-voltage application scenario, for example, when an output voltage is 800 V, the rated voltage of the rectifier diode in the AC/DC converter needs to be greater than 400 V to ensure that the AC/DC converter can work normally. As a price and the rated voltage of the rectifier diode are positively correlated, the AC/DC converter has relatively high costs.

### SUMMARY

This application provides an AC/DC converter and a charging apparatus. An internal structure of a switching unit is improved, so that costs of the AC/DC converter can be reduced, and conversion efficiency can be improved.

According to a first aspect, an embodiment of this application provides an AC/DC converter. The AC/DC converter is disposed between an alternating current power supply and power-consuming equipment. The AC/DC converter includes a circuit of at least one phase. A circuit of each phase includes an inductor, an autotransformer, a first switching unit, a second switching unit, at least two first rectifier units corresponding to the first switching unit, and at least two second rectifier units corresponding to the second switching unit. The autotransformer includes a first winding corresponding to the first switching unit and a second winding corresponding to the second switching unit. In a specific implementation, one end of the inductor is coupled to the alternating current power supply, and the other end of the inductor is coupled to one end of the first winding and one end of the second winding. The other end of the first winding is coupled to a winding connection end of the first switching unit, and the other end of the second winding is coupled to a winding connection end of the second switching unit. A bus connection end of the first switching unit is coupled to a bus of the AC/DC converter through the at least two first rectifier units, a bus connection end of the second switching unit is coupled to the bus of the AC/DC converter through the at least two second rectifier units, and the bus of the AC/DC converter is coupled to the power-consuming equipment. At least two groups of switching circuits are included between the winding connection end of any one of the switching units and a ground cable connection end of the switching unit, where each group of switching circuits includes a diode and a controllable switch connected in series to the diode, and the controllable switch is configured to control a connection or disconnection between the winding connection end and the ground cable connection end of the switching unit including the controllable switch. Compared with a current technology in which two switch tubes are connected in series for switching between charging/discharging states of an inductor and implement AC/DC conversion, this embodiment of this application improves an internal structure of a switching unit. In this embodiment of this application, the switching unit uses the at least two groups of switching circuits. Each group of switching circuits includes the diode and the controllable switch connected in series to the diode. An output voltage of the AC/DC converter may be withstood by the diode in the switching circuit and the rectifier units, or withstood by the controllable switch in the switching circuit and a rectifier diode. Therefore, in this embodiment of this application, an internal structure of a switching unit may be improved to reduce a voltage difference withstood by the rectifier units, so that when an output voltage for the power-consuming equipment provided by the AC/DC converter in this embodiment of this application is the same as that provided by an AC/DC converter provided in the current technology, the AC/DC converter in this embodiment of this application may select a rectifier component with a smaller rated voltage, and therefore, there are lower costs. In addition, a value of a rated voltage of a rectifier component is positively correlated with a forward voltage drop of the rectifier component. To be specific, a larger rated voltage of the rectifier component indicates a larger loss caused by the rectifier component. Therefore, in this embodiment of this application, an internal structure of a switching unit is improved, so that a rectifier component with a smaller rated voltage can be selected. Not only costs can be reduced, a loss of the AC/DC converter can be further reduced, and conversion efficiency can be improved.

With reference to the first aspect, in a first possible implementation, the AC/DC converter in this embodiment of this application further includes a controller. The controller may send a first pulse control signal to a first controllable switch included in each group of switching circuits in the first switching unit, where the first pulse control signal is used to control on or off of the first controllable switch. The controller may further send a second pulse control signal to a second controllable switch included in each group of switching circuits in the second switching unit, where the second pulse control signal is used to control on or off of the second controllable switch. The first pulse control signal and the second pulse control signal have a same frequency, with a phase difference of 180°. In this case, there is a minimum current ripple of the AC/DC converter.

With reference to the first aspect or the first possible implementation of the first aspect, in a second possible implementation, the at least two groups of switching circuits included in any one of the switching units include a first group of switching circuits and a second group of switching circuits. The first group of switching circuits includes a first diode and a first switch tube, the second group of switching circuits includes a second diode and a second switch tube, and the bus of the AC/DC converter includes a positive bus and a negative bus. In a specific implementation, both an anode of the first diode and a cathode of the second diode are coupled to the other end of the winding corresponding to the switching unit, both a cathode of the first diode and a first end of the first switch tube are coupled to the positive bus of the AC/DC converter by using one rectifier unit in the two rectifier units corresponding to the switching unit, both an anode of the second diode and a second end of the second switch tube are coupled to the negative bus of the AC/DC converter by using the other rectifier unit in the two rectifier units corresponding to the switching unit, and both a second end of the first switch tube and a first end of the second switch tube are coupled to a ground cable of the AC/DC converter. In this embodiment of this application, the other end of the winding is connected to a connection midpoint between the two diodes, and the ground cable of the AC/DC converter is connected to a connection midpoint between the two switch tubes. In this circuit connection mode of the switching unit, a switching speed of the switch tubes may be relatively slow, to avoid frequent switching of the switch tubes, thereby improving a service life of the AC/DC converter.

With reference to the first aspect or the first possible implementation of the first aspect, in a third possible implementation, the at least two groups of switching circuits included in any one of the switching units include a first group of switching circuits and a second group of switching circuits. The first group of switching circuits includes a third diode and a third switch tube, the second group of switching circuits includes a fourth diode and a fourth switch tube, and the bus of the AC/DC converter includes a positive bus and a negative bus. In a specific implementation, both a cathode of the third diode and a first end of the third switch tube are coupled to the positive bus of the AC/DC converter by using one rectifier unit in the two rectifier units corresponding to the switching unit, both a second end of the third switch tube and a first end of the fourth switch tube are coupled to the other end of the winding corresponding to the switching unit, both an anode of the fourth diode and a second end of the fourth switch tube are coupled to the negative bus of the AC/DC converter by using the other rectifier unit in the two rectifier units corresponding to the switching unit, and both an anode of the third diode and a cathode of the fourth diode are coupled to a ground cable of the AC/DC converter. In this embodiment of this application, the other end of the winding is connected to a connection midpoint between the two switch tubes, and the ground cable of the AC/DC converter is connected to a connection midpoint between the two diodes. In this circuit connection mode of the switching unit, a diode conduction speed is relatively high, so that a conversion speed of the AC/DC converter can be improved.

With reference to the second possible implementation of the first aspect or the third possible implementation of the first aspect, in a fourth possible implementation, the AC/DC converter provided in this embodiment of this application further includes a first capacitor and a second capacitor. The first capacitor is coupled between the positive bus of the AC/DC converter and the ground cable of the AC/DC converter, and the second capacitor is coupled between the negative bus of the AC/DC converter and the ground cable of the AC/DC converter.

With reference to the first aspect or any one of the foregoing possible implementations of the first aspect, in a fifth possible implementation, the AC/DC converter includes a three-phase circuit, and a sum of phasors of currents in the three-phase circuit is zero.

With reference to any one of the foregoing possible implementations of the first aspect, in a sixth possible implementation, the controller may further control duty ratios of the first pulse control signal and the second pulse control signal to be less than 0.5 when a voltage of the alternating current power supply is less than a half of an output voltage of the AC/DC converter; or the controller may further control duty ratios of both the first pulse control signal and the second pulse control signal to be greater than 0.5 when a voltage of the alternating current power supply is greater than a half of an output voltage of the AC/DC converter.

With reference to the first aspect or any one of the foregoing possible implementations of the first aspect, in a seventh possible implementation, winding turns of the first winding and the second winding are equal.

According to a second aspect, an embodiment of this application provides a charging apparatus. The charging apparatus may include the AC/DC converter according to the first aspect or any one of possible implementations of the first aspect and an electric meter, and the electric meter is connected in series between an alternating current power supply and the AC/DC converter. The AC/DC converter may convert an alternating current output from the alternating current power supply into a first direct current, and transmit the first direct current to power-consuming equipment, and the electric meter may measure electric energy supplied by the alternating current power supply to the power-consuming equipment.

With reference to the second aspect, in a first possible implementation, the charging apparatus further includes a DC/DC converter. The DC/DC converter is disposed between the AC/DC converter and the power-consuming equipment. The AC/DC converter transmits, via the DC/DC converter to the power-consuming equipment, the first direct current obtained by converting the alternating current output from the alternating current power supply. The DC/DC converter may convert the first direct current to obtain a second direct current, and supply the second direct current to the power-consuming equipment.

It should be understood that, for implementation and beneficial effects of the foregoing aspects of this application, a reference may be provided for each other.

### BRIEF DESCRIPTION OF DRAWINGS

FIG. 1 is a circuit diagram of an AC/DC converter in a current technology;
FIG. 2 is a block diagram of a structure of a charging apparatus according to an embodiment of this application;
FIG. 3 is a block diagram of a structure of an AC/DC converter according to an embodiment of this application;
FIG. 4A and FIG. 4B are circuit diagrams of a switching unit according to an embodiment of this application;
FIG. 5 is a sequence diagram of a pulse control signal according to an embodiment of this application;
FIG. 6A to FIG. 6F are equivalent circuit diagrams of an AC/DC converter according to an embodiment of this application;
FIG. 7A to FIG. 7F are other equivalent circuit diagrams of an AC/DC converter according to an embodiment of this application;
FIG. 8 is another sequence diagram of a pulse control signal according to an embodiment of this application;
FIG. 9A and FIG. 9B are still another equivalent circuit diagram of an AC/DC converter according to an embodiment of this application;
FIG. 10A and FIG. 10B are yet another equivalent circuit diagram of an AC/DC converter according to an embodiment of this application;
FIG. 11 is a three-phase circuit diagram of an AC/DC converter according to an embodiment of this application; and
FIG. 12 is a schematic diagram of a waveform of an alternating current power grid according to an embodiment of this application.

### DESCRIPTION OF EMBODIMENTS

Technical solutions of embodiments of this application are clearly and completely described below with reference to the accompanying drawings in embodiments of this application. Clearly, the described embodiments are some of rather than all embodiments of this application. Based on embodiments of this application, all other embodiments obtained by a person of ordinary skill in the art without creative efforts shall fall within the protection scope of this application.

The technical solutions of this application are further described below in detail with reference to the accompanying drawings.

FIG. 2 is a block diagram of a structure of a charging apparatus according to an embodiment of this application. As shown in FIG. 2, a charging apparatus 21 is disposed between an alternating current power supply and power-consuming equipment. The charging apparatus 21 may include an electric meter 211 and an AC/DC converter 212. An output end of the alternating current power supply is coupled to one end of the electric meter 211, the other end of the electric meter 211 is coupled to one end of the AC/DC converter 212, and the other end of the AC/DC converter 212 is coupled to the power-consuming equipment.

It should be noted that "coupling" used in this application indicates a direct or indirect connection. For example, coupling between A and B may be a direct connection between A and B, or may be an indirect connection between A and B via one or more other electrical components. For example, A is directly connected to C, and C is directly connected to B, so that A is connected to B via C.

The AC/DC converter 212 may convert an alternating current output from the alternating current power supply into a first direct current, and transmit the first direct current to the power-consuming equipment. The electric meter 211 is connected in series between the alternating current power supply and the AC/DC converter 212, and may measure electric energy supplied by the alternating current power supply to the power-consuming equipment. Optionally, the AC/DC converter 212 may further include a communications module (not shown in the figure), and the communications module may transmit electric energy data measured by the electric meter 211 to the power-consuming equipment. Alternatively, the AC/DC converter 212 may further include a display module (not shown in the figure), and the display module may display electric energy data measured by the electric meter 211.

For example, the AC/DC converter 212 may perform rectification by using a circuit structure, for example, a half-wave rectifier, a full-wave rectifier, or an active inverter.

For example, the power-consuming equipment may be a terminal, an inverter, an electric vehicle, or the like. For example, the alternating current power supply in the AC/DC converter 212 may be from an alternating current power grid. In this case, the charging apparatus in this embodiment of this application may be specifically implemented as a charging pile, to output a direct current to an electric vehicle.

In some feasible implementations, the AC/DC converter 212 may further include a DC/DC converter (not shown in the figure). The DC/DC converter is disposed between the AC/DC converter 212 and the power-consuming equipment, that is, the other end of the AC/DC converter 212 is coupled to the power-consuming equipment via the DC/DC converter. In a specific implementation, the AC/DC converter 212 may convert the alternating current output from the alternating current power supply into the first direct current, and the DC/DC converter may convert the first direct current into a second direct current, and transmit the second direct current to the power-consuming equipment.

For example, the DC/DC converter may be, for example, a BUCK converter. The BUCK converter may step down a voltage of the first direct current to obtain the second direct current, that is, the second direct current may be less than the first direct current. The DC/DC converter may be, for example, a BOOST converter. The BOOST converter may step up a voltage of the first direct current to obtain the second direct current, that is, the second direct current may be greater than the first direct current. Optionally, the DC/DC converter may be, for example, a BUCK-BOOST converter. The BUCK-BOOST converter may step up or step down a voltage of the first direct current to obtain the second direct current, that is, the second direct current may be greater than or less than the first direct current. Optionally, the AC/DC converter 212 and the DC/DC converter may be specifically built in a charging pile in a charging station in a form of a printed circuit board PCB.

A specific structure of the AC/DC converter provided in this embodiment of this application is described below with reference to the accompanying drawings.

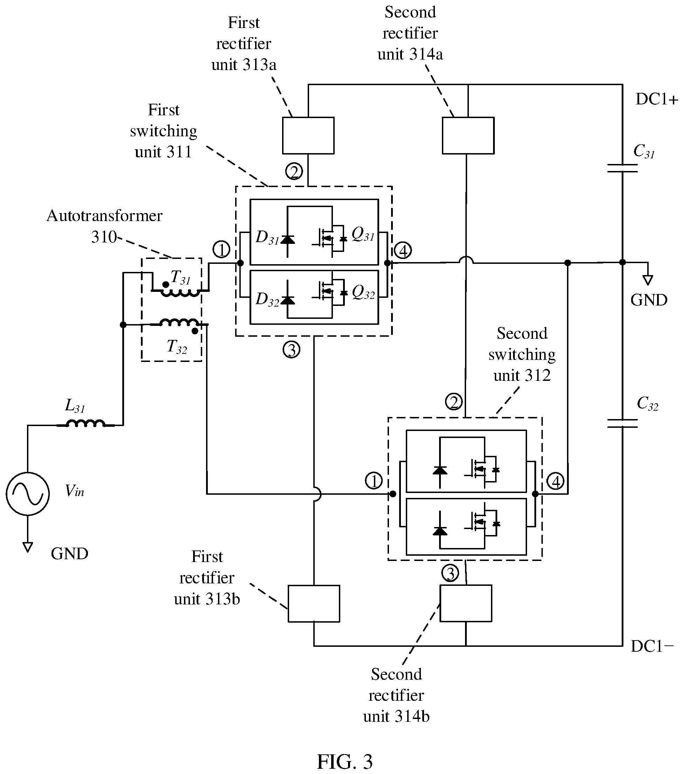

FIG. 3 is a block diagram of a structure of an AC/DC converter according to an embodiment of this application. As shown in FIG. 3, the AC/DC converter provided in this application is disposed between an alternating current power supply and power-consuming equipment. The AC/DC converter includes a circuit of at least one phase. It can be understood that a quantity of circuit phases included in the AC/DC converter determines a scenario to which the AC/DC converter is applicable. For example, if the AC/DC converter is applicable to an application scenario in which the alternating current power supply is an alternating current power grid, the AC/DC converter includes a three-phase circuit. For another example, if the AC/DC converter is applicable to a scenario in which the alternating current power supply is a single-phase alternating current, the AC/DC converter includes a single-phase circuit.

In FIG. 3, an example in which the AC/DC converter includes a single-phase circuit is used. The single-phase circuit includes an inductor *L*₃₁, an autotransformer 310, a first switching unit 311, a second switching unit 312, at least two first rectifier units (for example, a first rectifier unit 313a and a first rectifier unit 313b) corresponding to the first switching unit 311, and at least two second rectifier units (for example, a second rectifier unit 314a and a second rectifier unit 314b) corresponding to the second switching unit 312. The autotransformer 310 includes a first winding *T*₃₁ corresponding to the first switching unit 311 and a second winding *T*₃₂ corresponding to the second switching unit 312.

Optionally, winding turns of the first winding *T*₃₁ and the second winding *T*₃₂ are equal. In this case, the autotransformer 310 divides and shunts a current of the inductor *L*₃₁, so that an output current of the AC/DC converter can be increased.

In a specific implementation, one end of the inductor *L*₃₁ is coupled to the alternating current power supply, the other end of the inductor *L*₃₁ is coupled to one end of the first winding *T*₃₁ and one end of the second winding *T*₃₂, the other end of the first winding *T*₃₁ is coupled to a winding connection end ① of the first switching unit 311, and the other end of the second winding *T*₃₂ is coupled to a winding connection end ① of the second switching unit 312.

A positive bus connection end ② of the first switching unit 311 is coupled to a positive bus DC1+ of the AC/DC converter via the first rectifier unit 313a, and a negative bus connection end ③ of the first switching unit 311 is coupled to a negative bus DC1- of the AC/DC converter via the first rectifier unit 313b.

A positive bus connection end ② of the second switching unit 312 is coupled to a positive bus DC1+ of the AC/DC converter via the second rectifier unit 314a, and a negative bus connection end ③ of the second switching unit 312 is coupled to a negative bus DC1- of the AC/DC converter via the second rectifier unit 314b.

The power-consuming equipment is coupled between the positive bus DC1+ and the negative bus DC1- of the AC/DC converter, and an output voltage of the AC/DC converter is a voltage difference between the positive bus DC1+ of the AC/DC converter and the negative bus DC1- of the AC/DC converter.

An internal structure of each of the switching units may be specifically as follows: at least two groups of switching circuits are included between the winding connection end ① of any one of the switching units and a ground cable connection end ④ of the switching unit, where each group of switching circuits includes a diode and a controllable switch connected in series to the diode. The controllable switch may control a connection or disconnection between the winding connection end ① and the ground cable connection end ④ of the switching unit including the controllable switch. For example, the first group of switching circuits in the first switching unit 311 includes a diode *D*₃₁ and a switch tube *Q*₃₁ connected in series to the diode *D*₃₁. If the switch tube *Q*₃₁ is off, the winding connection end ① of the first switching unit 311 and the ground cable connection end ④ of the first switching unit 311 is disconnected; or if the switch tube *Q*₃₁ is on, a connection between the winding connection end ① of the first switching unit 311 and the ground cable connection end ④ of the first switching unit 311 is on when the alternating current power supply is in a positive half cycle. The second group of switching circuits in the first switching unit 311 includes a diode *D*₃₂ and a switch tube *Q*₃₂ connected in series to the diode *D*₃₂. If the switch tube *Q*₃₂ is off, the winding connection end ① of the first switching unit 311 and the ground cable connection end 40 of the first switching unit 311 is disconnected; or if the switch tube *Q*₃₂ is on, a connection between the winding connection end ① of the first switching unit 311 and the ground cable connection end ④ of the first switching unit 311 is on when the alternating current power supply is in a negative half cycle.

It can be understood that, in FIG. 3, an example in which the controllable switch is specifically implemented as a metal-oxide semiconductor field-effect transistor (Metal-Oxide Semiconductor Field-Effect Transistor, MOSFET) is used. It can be understood that the controllable switch may alternatively be specifically implemented as a relay, a contactor, an insulated gate bipolar transistor (Insulated Gate Bipolar Transistor, IGBT), or the like.

In some feasible implementations, the AC/DC converter further includes a first capacitor *C*₃₁ and a second capacitor *C*₃₂. The first capacitor *C*₃₁ is coupled between the positive bus DC1+ of the AC/DC converter and a ground cable GND of the AC/DC converter, and the second capacitor *C*₃₂ is coupled between the negative bus DC1- of the AC/DC converter and the ground cable GND of the AC/DC converter. It can be understood that the first capacitor *C*₃₁ is a filter capacitor of the positive bus DC1+ of the AC/DC converter, and the second capacitor *C*₃₂ is a filter capacitor of the negative bus DC1- of the AC/DC converter.

In some feasible implementations, the AC/DC converter may further include a controller (not shown in the figure). The controller may send a first pulse control signal to a first controllable switch (for example, the switch tube *Q*₃₁ and the switch tube *Q*₃₂) included in each group of switching circuits in the first switching unit 311. The first pulse control signal may control on or off of the switch tube *Q*₃₁ and the switch tube *Q*₃₂. The controller may further send a second pulse control signal to a second controllable switch (that is, the two switch tubes in the second switching unit 312) included in each group of switching circuits in the second switching unit 312. The second pulse control signal may control on or off of the two switch tubes in the second switching unit 312. The first pulse control signal and the second pulse control signal have a same frequency. Optionally, a phase difference between the first pulse control signal and the second pulse control signal may be 180°. In this case, there is a minimum current ripple of the AC/DC converter.

Further, in some feasible implementations, a voltage of the alternating current power supply is represented by *Vᵢₙ*, and the output voltage of the AC/DC converter is represented by *Vₒ*. When *Vᵢₙ* < *Vₒ*/2, the controller controls duty ratios of the first pulse control signal and the second pulse control signal to be less than 0.5. Alternatively, when *Vᵢₙ* > *Vₒ*/2, the controller controls duty ratios of the first pulse control signal and the second pulse control signal to be greater than 0.5. A duty ratio of the first pulse control signal is the same as a duty ratio of the second pulse control signal. The controller may keep the output voltage, of the AC/DC converter, *Vₒ* = 2*Vᵢₙ* by adjusting the duty ratio of the pulse control signal.

Compared with a current technology in which two switch tubes are connected in series for switching between charging/discharging states of an inductor and implement AC/DC conversion, this embodiment of this application improves an internal structure of a switching unit. In this embodiment of this application, the switching unit uses the at least two groups of switching circuits. Each group of switching circuits includes the diode and the controllable switch connected in series to the diode. An output voltage of the AC/DC converter may be withstood by the diode in the switching circuit and the rectifier units, or withstood by the controllable switch in the switching circuit and a rectifier diode. Therefore, in this embodiment of this application, an internal structure of a switching unit may be improved to reduce a voltage difference withstood by the rectifier units, so that when an output voltage for the power-consuming equipment provided by the AC/DC converter in this embodiment of this application is the same as that provided by an AC/DC converter provided in the current technology, the AC/DC converter in this embodiment of this application may select a rectifier component with a smaller rated voltage, and therefore, there are lower costs. In addition, a value of a rated voltage of a rectifier component is positively correlated with a forward voltage drop of the rectifier component. To be specific, a larger rated voltage of the rectifier component indicates a larger loss caused by the rectifier component. Therefore, in this embodiment of this application, an internal structure of a switching unit is improved, so that a rectifier component with a smaller rated voltage can be selected. Not only costs can be reduced, a loss of the AC/DC converter can be further reduced, and conversion efficiency can be improved.

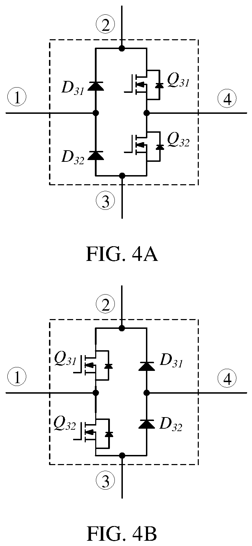

In some feasible implementations, a circuit diagram of the first switching unit shown in FIG. 4A is used as an example. Both an anode of the diode *D*₃₁ and a cathode of the diode *D*₃₂ are coupled to the other end of the first winding *T*₃₁ corresponding to the first switching unit. That is, a connection point between the anode of the diode *D*₃₁ and the cathode of the diode *D*₃₂ is the winding connection end ① of the first switching unit 311. Both a cathode of the diode *D*₃₁ and a first end (that is, a drain) of the switch tube *Q*₃₁ are coupled to the positive bus DC1+ of the AC/DC converter by using one rectifier unit (for example, the first rectifier unit 313a) in the two rectifier units corresponding to the first switching unit. That is, a connection point between the cathode of the diode *D*₃₁ and the drain of the switch tube *Q*₃₁ is the positive bus connection end ② of the first switching unit 311. Both an anode of the diode *D*₃₂ and a second end (that is, a source) of the switch tube *Q*₃₁ are coupled to the negative bus DC1- of the AC/DC converter by using the other rectifier unit (for example, the first rectifier unit 313b) in the two rectifier units corresponding to the first switching unit. That is, a connection point between the anode of the diode *D*₃₂ and the source of the switch tube *Q*₃₁ is the negative bus connection end ③ of the first switching unit 311. Both the second end (that is, the source) of the switch tube *Q*₃₁ and a first end (that is, a drain) of the switch tube *Q*₃₂ are coupled to the ground cable of the AC/DC converter. That is, a connection point between the source of the switch tube *Q*₃₁ and the drain of the switch tube *Q*₃₂ is the ground cable connection end ④ of the first switching unit 311.

Similarly, for a circuit diagram of the second switching unit 312, refer to the descriptions of the first switching unit. Details are not described herein again.

In this embodiment of this application, the other end of the winding is connected to a connection midpoint between the two diodes, and the ground cable of the AC/DC converter is connected to a connection midpoint between the two switch tubes. In this circuit connection mode of the switching unit, a line-frequency diode with a relatively low switching speed may be used, and a switching speed of the switch tubes may also be relatively low, to avoid frequent switching of the switch tubes, thereby improving a service life of the AC/DC converter.

Optionally, in some feasible implementations, an example in which a circuit diagram of the second switching unit shown in FIG. 4B is used. Both the second end (that is, the source) of the switch tube *Q*₃₁ and the first end (that is, the drain) of the switch tube *Q*₃₂ are coupled to the other end of the first winding *T*₃₁ corresponding to the first switching unit. That is, a connection point between the source of the switch tube *Q*₃₁ and the drain of the switch tube *Q*₃₂ is the winding connection end ① of the first switching unit 311. Both the first end (that is, the drain) of the switch tube *Q*₃₁ and the cathode of the diode *D*₃₁ are coupled to the positive bus DC1+ of the AC/DC converter by using one rectifier unit (for example, the first rectifier unit 313a) in the two rectifier units corresponding to the first switching unit. That is, a connection point between the drain of the switch tube *Q*₃₁ and the cathode of the diode *D*₃₁ is the positive bus connection end ② of the first switching unit 311. Both the second end (that is, the source) of the switch tube *Q*₃₂ and the anode of the diode *D*₃₂ are coupled to the negative bus DC1- of the AC/DC converter by using the other rectifier unit (for example, the first rectifier unit 313b) in the two rectifier units corresponding to the first switching unit. That is, a connection point between the anode of the diode *D*₃₂ and the source of the switch tube *Q*₃₁ is the negative bus connection end ③ of the first switching unit 311. Both the anode of the diode *D*₃₁ and the cathode of the diode *D*₃₂ are coupled to the ground cable of the AC/DC converter. That is, a connection point between the anode of the diode *D*₃₁ and the cathode of the diode *D*₃₂ is the ground cable connection end 40 of the first switching unit 311.

Similarly, for a circuit diagram of the second switching unit 312, refer to the descriptions of the first switching unit. Details are not described herein again.

In this embodiment of this application, unlike the switching unit shown in FIG. 4A, the other end of the winding is connected to a connection midpoint between the two switch tubes, and the ground cable of the AC/DC converter is connected to a connection midpoint between the two diodes. In this circuit connection mode of the switching unit, a diode conduction speed is relatively high, so that a conversion speed of the AC/DC converter can be improved.

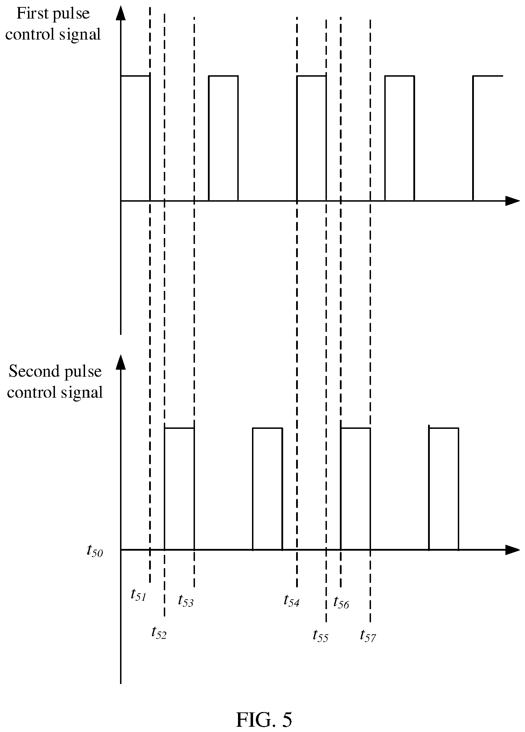

With reference to FIG. 5 to FIG. 7F, an operating principle of the AC/DC converter provided in embodiments of this application is described below.

FIG. 5 is a sequence diagram of a pulse control signal according to an embodiment of this application. As shown in FIG. 5, the first pulse control signal and the second pulse control signal have a same frequency, with a phase difference of 180°. In addition, duty ratios of the first pulse control signal and the second pulse control signal are less than 0.5.

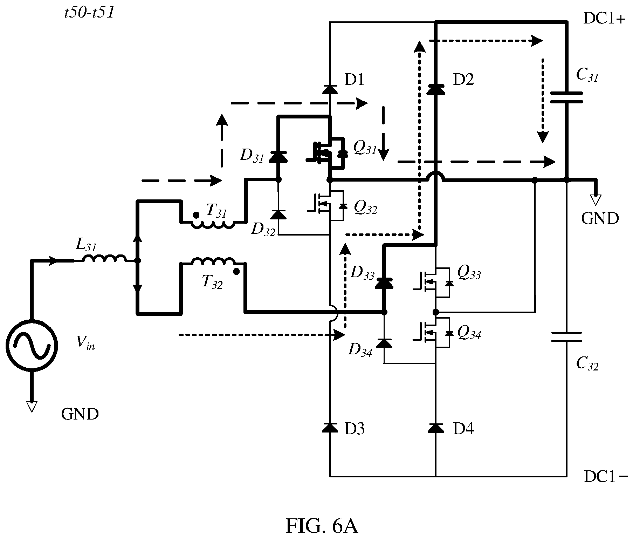

In some feasible implementations, when a connection relationship in the internal structure of the switching unit is shown in FIG. 4A, with reference to the sequence diagram of the pulse control signal shown in FIG. 5, it is assumed that the alternating current output from the alternating current power supply is in a positive half cycle in a time period from *t*₅₀ to *t*₅₃, and the alternating current output from the alternating current power supply is in a negative half cycle in a time period from *t*₅₄ to *t*₅₇. In this case, the AC/DC converter provided in embodiments of this application may obtain, at different moments, equivalent circuit diagrams as shown in FIG. 6A to FIG. 6F.

It should be first noted that in embodiments of this application, an example in which the rectifier unit is specifically implemented as a rectifier diode is used. It can be understood that the rectifier unit may be another semiconductor device, for example, a triode or an MOSFET.

In a time period from *t*₅₀ to *t*₅₁, the first pulse control signal is on a high level, and the switch tube *Q*₃₁ and the switch tube *Q*₃₂ are on, while the second pulse control signal is on a low level, and the switch tube *Q*₃₃ and the switch tube *Q*₃₄ are off. In this case, an equivalent circuit diagram of the AC/DC converter is shown in FIG. 6A. The alternating current output from the alternating current power supply flows through the inductor *L*₃₁ and then flows through the winding *T*₃₁ and the winding *T*₃₂ separately. A current on the winding *T*₃₁ flows through the diode *D*₃₁ and the switch tube *Q*₃₁ to the ground cable GND of the AC/DC converter, and the inductor *L*₃₁ is charging; and a current on the winding *T*₃₂ flows through the diode D₃₃, a rectifier diode D2, and the first capacitor *C*₃₁ to the ground cable GND of the AC/DC converter, and the inductor *L*₃₁ is discharging. A voltage on the positive bus DC1+ of the AC/DC converter is a direct current obtained by discharging of the inductor *L*₃₁ through the rectifier diode D2.

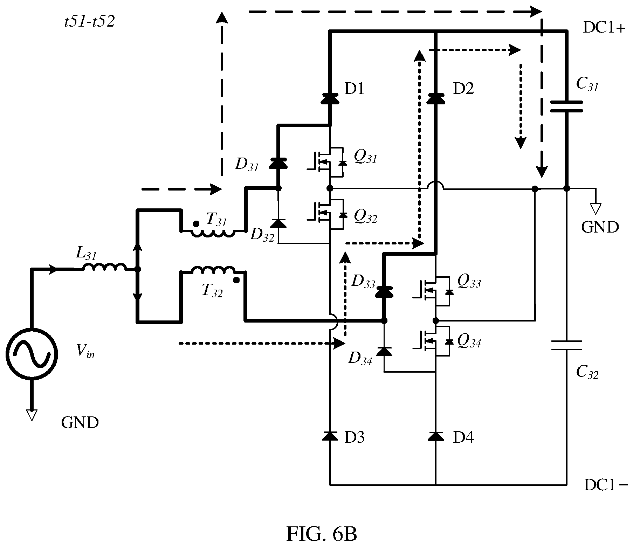

In a time period from *t*₅₁ to *t*₅₂, both the first pulse control signal and the second pulse control signal are on a low level, the switch tube *Q*₃₁ and the switch tube *Q*₃₂ are off, and the switch tube *Q*₃₃ and the switch tube *Q*₃₄ are off. In this case, an equivalent circuit diagram of the AC/DC converter is shown in FIG. 6B. The alternating current output from the alternating current power supply flows through the inductor *L*₃₁ and then flows through the winding *T*₃₁ and the winding *T*₃₂ separately. The current on the winding *T*₃₁ flows through the diode *D*₃₁, a rectifier diode D1, and the first capacitor *C*₃₁ to the ground cable GND of the AC/DC converter, and the inductor *L*₃₁ is charging; and the current on the winding *T*₃₂ flows through the diode *D*₃₃, the rectifier diode D2, and the first capacitor *C*₃₁ to the ground cable GND of the AC/DC converter, and the inductor *L*₃₁ is discharging. The voltage on the positive bus DC1+ of the AC/DC converter is a sum of direct currents obtained by discharging of the inductor *L*₃₁ through the rectifier diode D1 and the rectifier diode D2.

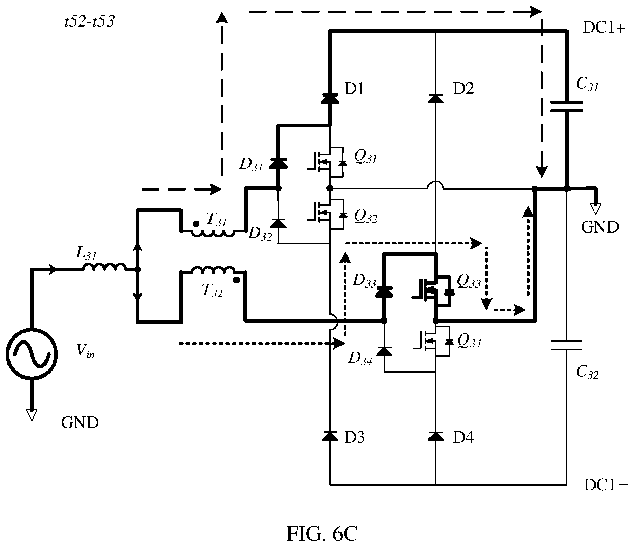

In a time period from *t*₅₂ to *t*₅₃, the first pulse control signal is on a low level, and the switch tube *Q*₃₁ and the switch tube *Q*₃₂ are off, while the second pulse control signal is on a high level, and the switch tube *Q*₃₃ and the switch tube *Q*₃₄ are on. In this case, an equivalent circuit diagram of the AC/DC converter is shown in FIG. 6C. The alternating current output from the alternating current power supply flows through the inductor *L*₃₁ and then flows through the winding *T*₃₁ and the winding *T*₃₂ separately. The current on the winding *T*₃₁ flows through the diode *D*₃₁, the rectifier diode D1, and the first capacitor *C*₃₁ to the ground cable GND of the AC/DC converter, and the inductor *L*₃₁ is discharging; and the current on the winding *T*₃₂ flows through the diode *D*₃₃ and the switch tube *Q*₃₃ to the ground cable GND of the AC/DC converter, and the inductor *L*₃₁ is discharging. The voltage on the positive bus DC1+ of the AC/DC converter is a direct current obtained by discharging of the inductor *L*₃₁ through the rectifier diode D1.

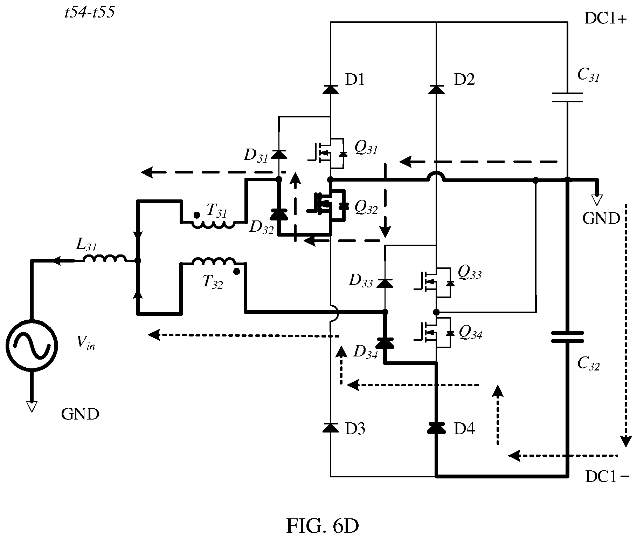

In a time period from *t*₅₄ to *t*₅₅, because the alternating current is in the negative half cycle, even if a pulse control signal in the time period from *t*₅₄ to *t*₅₅ is the same as the pulse control signal in the time period from *t*₅₀ to *t*₅₁ (that is, the first pulse control signal is on a high level, and the second pulse control signal is on a low level), there is a different equivalent circuit diagram of the AC/DC converter. In this case, the switch tube *Q*₃₁ and the switch tube *Q*₃₂ are on, the switch tube *Q*₃₃ and the switch tube *Q*₃₄ are off, and an equivalent circuit diagram of the AC/DC converter is shown in FIG. 6D. The current on the winding *T*₃₁ flows through the switch tube *Q*₃₂ and a diode *D*₃₂ to the ground cable GND of the AC/DC converter, and the inductor *L*₃₁ is charging; and the current on the winding *T*₃₂ flows through the second capacitor *C*₃₂, a rectifier diode D4, and a diode *D*₃₄ to the ground cable GND of the AC/DC converter, and the inductor *L*₃₁ is discharging. The currents on the winding *T*₃₁ and on the winding *T*₃₂ converge to the inductor *L*₃₁. The voltage on the negative bus DC1- of the AC/DC converter is a direct current obtained by discharging of the inductor *L*₃₁ through the rectifier diode D4.

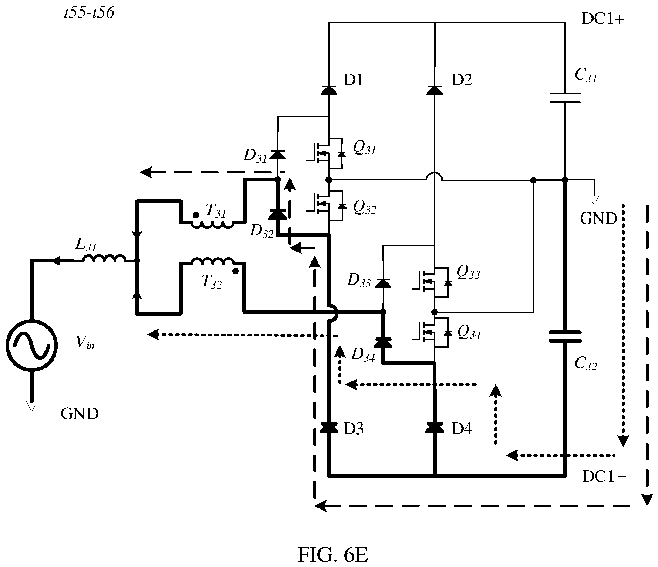

Similarly, in a time period from *t*₅₅ to *t*₅₆, both the first pulse control signal and the second pulse control signal are on a low level, the switch tube *Q*₃₁ and the switch tube *Q*₃₂ are off, and the switch tube *Q*₃₃ and the switch tube *Q*₃₄ are off. In this case, an equivalent circuit diagram of the AC/DC converter is shown in FIG. 6E. The current on the winding *T*₃₁ flows through the second capacitor *C*₃₂, a rectifier diode D3, and the diode *D*₃₂ to the ground cable GND of the AC/DC converter, and the inductor *L*₃₁ is discharging; and the current on the winding *T*₃₂ flows through the second capacitor *C*₃₂, the rectifier diode D4, and the diode *D*₃₄ to the ground cable GND of the AC/DC converter, and the inductor *L*₃₁ is discharging. The currents on the winding *T*₃₁ and on the winding *T*₃₂ converge to the inductor *L*₃₁. The voltage on the negative bus DC1- of the AC/DC converter is a direct current obtained by discharging of the inductor *L*₃₁ through the rectifier diode D3 and the rectifier diode D4.

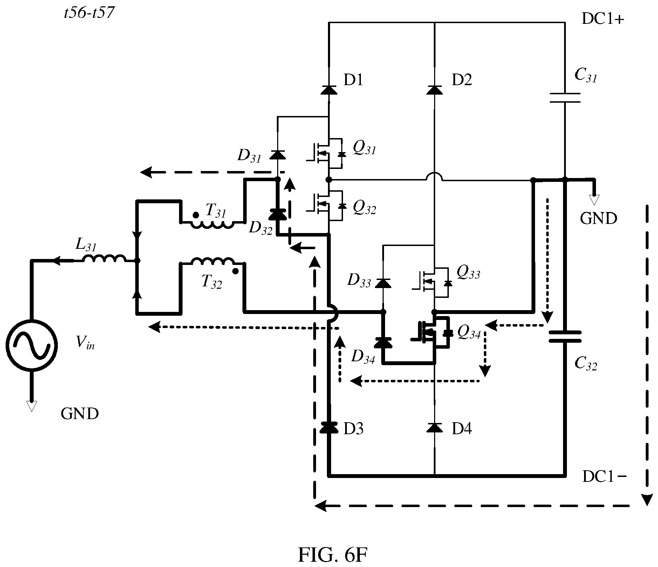

In a time period from *t*₅₆ to *t*₅₇, the first pulse control signal is on a low level, and the switch tube *Q*₃₁ and the switch tube *Q*₃₂ are off, while the second pulse control signal is on a high level, and the switch tube *Q*₃₃ and the switch tube *Q*₃₄ are on. In this case, an equivalent circuit diagram of the AC/DC converter is shown in FIG. 6F. The current on the winding *T*₃₁ flows through the second capacitor *C*₃₂, a rectifier diode D3, and the diode *D*₃₂ to the ground cable GND of the AC/DC converter, and the inductor *L*₃₁ is discharging; and the current on the winding *T*₃₂ flows through the switch tube *Q*₃₄ and the diode *D*₃₄ to the ground cable GND of the AC/DC converter, and the inductor *L*₃₁ is charging. The currents on the winding *T*₃₁ and on the winding *T*₃₂ converge to the inductor *L*₃₁. The voltage on the negative bus DC1- of the AC/DC converter is a direct current obtained by discharging of the inductor *L*₃₁ through the rectifier diode D3.

Optionally, in some feasible implementations, when a connection relationship in the internal structure of the switching unit is shown in FIG. 4B, the time sequence diagram of the pulse control signal shown in FIG. 5 is still applicable. However, a current loop formed with the inductor *L*₃₁ varies at various moments.

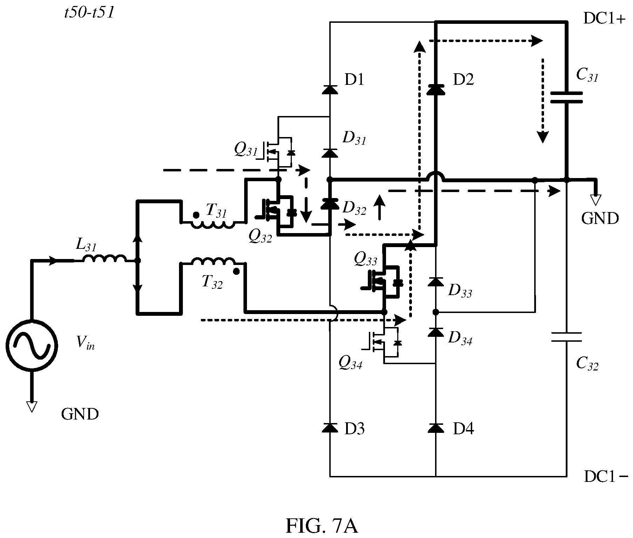

For example, in the time period from *t*₅₀ to *t*₅₁, the switch tube *Q*₃₁ and the switch tube *Q*₃₂ are on, and the switch tube *Q*₃₃ and the switch tube *Q*₃₄ are off. In this case, an equivalent circuit diagram of the AC/DC converter is shown in FIG. 7A. The alternating current output from the alternating current power supply flows through the inductor *L*₃₁ and then flows through the winding *T*₃₁ and the winding *T*₃₂ separately. Different from the case in FIG. 6A, the current on the winding *T*₃₁ flows through the switch tube *Q*₃₂ and the diode *D*₃₂ to the ground cable GND of the AC/DC converter, and the inductor *L*₃₁ is charging; and the current on the winding *T*₃₂ flows through a parasitic diode of the switch tube *Q*₃₃, the rectifier diode D2, and the first capacitor *C*₃₁ to the ground cable GND of the AC/DC converter, and the inductor *L*₃₁ is discharging. The voltage on the positive bus DC1+ of the AC/DC converter is a direct current obtained by discharging of the inductor *L*₃₁ through the rectifier diode D2.

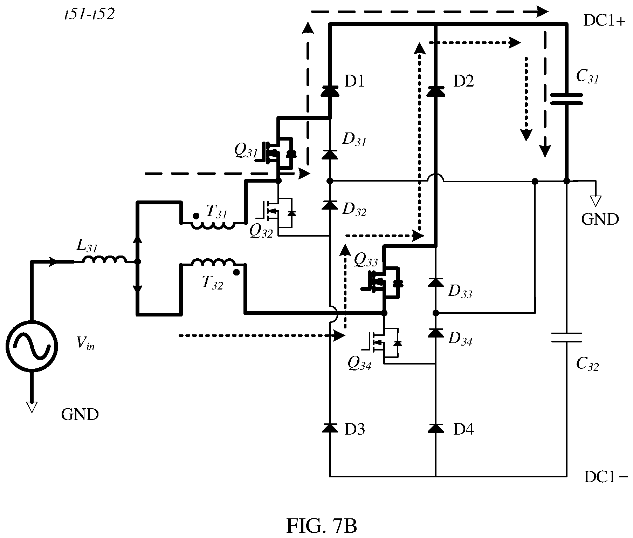

In the time period from *t*₅₁ to *t*₅₂, the switch tube *Q*₃₁ and the switch tube *Q*₃₂ are off, and the switch tube *Q*₃₃ and the switch tube *Q*₃₄ are off. In this case, an equivalent circuit diagram of the AC/DC converter is shown in FIG. 7B. The alternating current output from the alternating current power supply flows through the inductor *L*₃₁ and then flows through the winding *T*₃₁ and the winding *T*₃₂ separately. Different from the case in FIG. 6B, the current on the winding *T*₃₁ flows through a parasitic diode of the switch tube *Q*₃₁, the rectifier diode D1, and the first capacitor *C*₃₁ to the ground cable GND of the AC/DC converter, and the inductor *L*₃₁ is discharging; and the current on the winding *T*₃₂ flows through the parasitic diode of the switch tube *Q*₃₃, the rectifier diode D2, and the first capacitor *C*₃₁ to the ground cable GND of the AC/DC converter, and the inductor *L*₃₁ is discharging. The voltage on the positive bus DC1+ of the AC/DC converter is a sum of direct currents obtained by discharging of the inductor *L*₃₁ through the rectifier diode D1 and the rectifier diode D2.

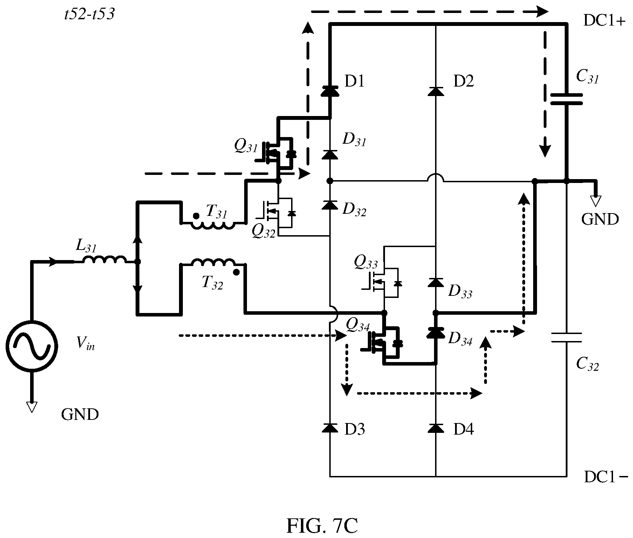

In the time period from *t*₅₂ to *t*₅₃, the switch tube *Q*₃₁ and the switch tube *Q*₃₂ are off, and the switch tube *Q*₃₃ and the switch tube *Q*₃₄ are on. In this case, an equivalent circuit diagram of the AC/DC converter is shown in FIG. 7C. The alternating current output from the alternating current power supply flows through the inductor *L*₃₁ and then flows through the winding *T*₃₁ and the winding *T*₃₂ separately. Different from the case in FIG. 6C, the current on the winding *T*₃₁ flows through the parasitic diode of the switch tube *Q*₃₁, the rectifier diode D1, and the first capacitor *C*₃₁ to the ground cable GND of the AC/DC converter, and the inductor *L*₃₁ is discharging; and the current on the winding *T*₃₂ flows through the switch tube *Q*₃₄ and the diode *D*₃₄ to the ground cable GND of the AC/DC converter, and the inductor *L*₃₁ is charging. The voltage on the positive bus DC1+ of the AC/DC converter is a direct current obtained by discharging of the inductor *L*₃₁ through the rectifier diode D1.

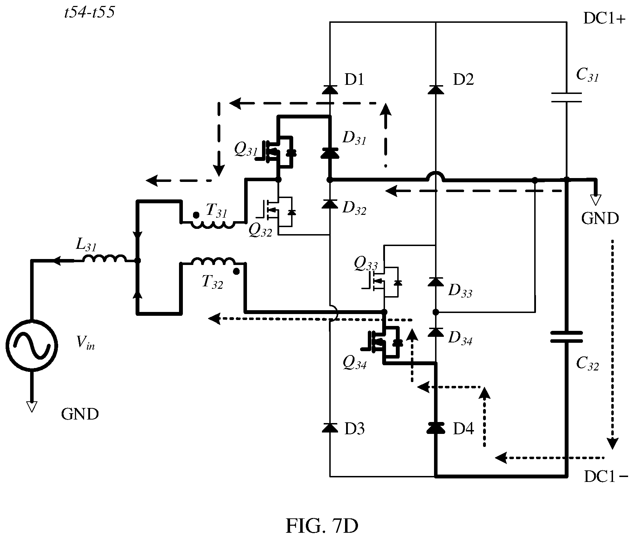

In the time period from *t*₅₄ to *t*₅₅, the alternating current is in the negative half cycle, the switch tube *Q*₃₁ and the switch tube *Q*₃₂ are on, the switch tube *Q*₃₃ and the switch tube *Q*₃₄ are off, and an equivalent circuit diagram of the AC/DC converter is shown in FIG. 7D. Different from the case in FIG. 6D, the current on the winding *T*₃₁ flows through the diode *D*₃₁ and the switch tube *Q*₃₁ to the ground cable GND of the AC/DC converter, and the inductor *L*₃₁ is charging; and the current on the winding *T*₃₂ flows through the second capacitor *C*₃₂, the rectifier diode D4, and a parasitic diode of the switch tube *Q*₃₄ to the ground cable GND of the AC/DC converter, and the inductor *L*₃₁ is discharging. The currents on the winding *T*₃₁ and on the winding *T*₃₂ converge to the inductor *L*₃₁. The voltage on the negative bus DC1- of the AC/DC converter is a direct current obtained by discharging of the inductor *L*₃₁ through the rectifier diode D4.

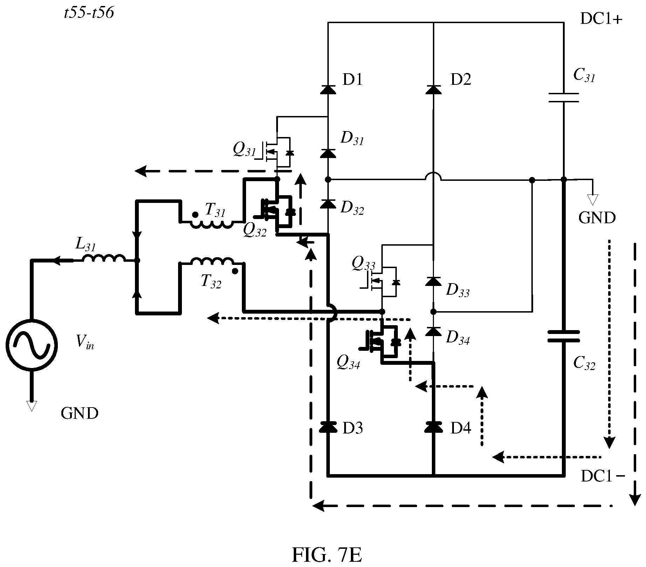

In the time period from *t*₅₅ to *t*₅₆, the alternating current is in the negative half cycle, the switch tube *Q*₃₁ and the switch tube *Q*₃₂ are off, and the switch tube *Q*₃₃ and the switch tube *Q*₃₄ are off. In this case, an equivalent circuit diagram of the AC/DC converter is shown in FIG. 7E. Different from the case in FIG. 6E, the current on the winding *T*₃₁ flows through the second capacitor *C*₃₂, the rectifier diode D3, and a parasitic diode of the switch tube *Q*₃₂ to the ground cable GND of the AC/DC converter, and the inductor *L*₃₁ is discharging; and the current on the winding *T*₃₂ flows through the second capacitor *C*₃₂, the rectifier diode D4, and the parasitic diode of the switch tube *Q*₃₄ to the ground cable GND of the AC/DC converter, and the inductor *L*₃₁ is discharging. The currents on the winding *T*₃₁ and on the winding *T*₃₂ converge to the inductor *L*₃₁. The voltage on the negative bus DC1- of the AC/DC converter is a direct current obtained by discharging of the inductor *L*₃₁ through the rectifier diode D3 and the rectifier diode D4.

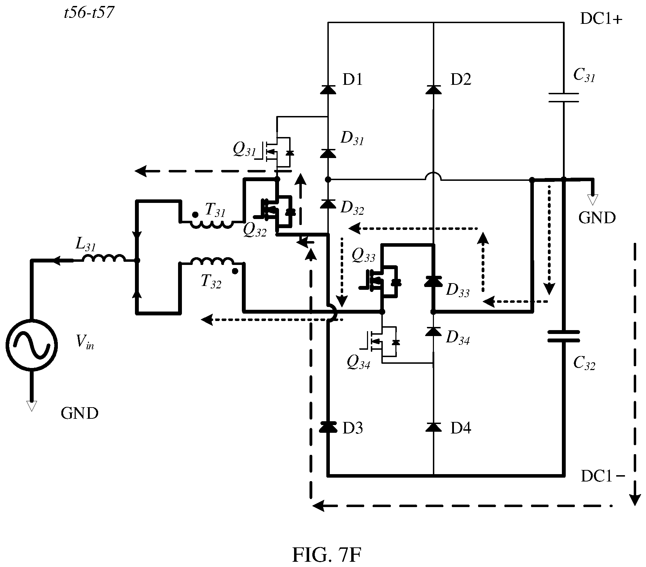

In the time period from *t*₅₆ to *t*₅₇, the alternating current is in the negative half cycle, the switch tube *Q*₃₁ and the switch tube *Q*₃₂ are off, and the switch tube *Q*₃₃ and the switch tube *Q*₃₄ are on. In this case, an equivalent circuit diagram of the AC/DC converter is shown in FIG. 7F. Different from the case in FIG. 6F, the current on the winding *T*₃₁ flows through the second capacitor *C*₃₂, the rectifier diode D3, and a parasitic diode of the switch tube *Q*₃₂ to the ground cable GND of the AC/DC converter, and the inductor *L*₃₁ is discharging; and the current on the winding *T*₃₂ flows through the diode *D*₃₃ and the switch tube *Q*₃₃ to the ground cable GND of the AC/DC converter, and the inductor *L*₃₁ is charging. The currents on the winding *T*₃₁ and on the winding *T*₃₂ converge to the inductor *L*₃₁. The voltage on the negative bus DC1- of the AC/DC converter is a direct current obtained by discharging of the inductor *L*₃₁ through the rectifier diode D3.

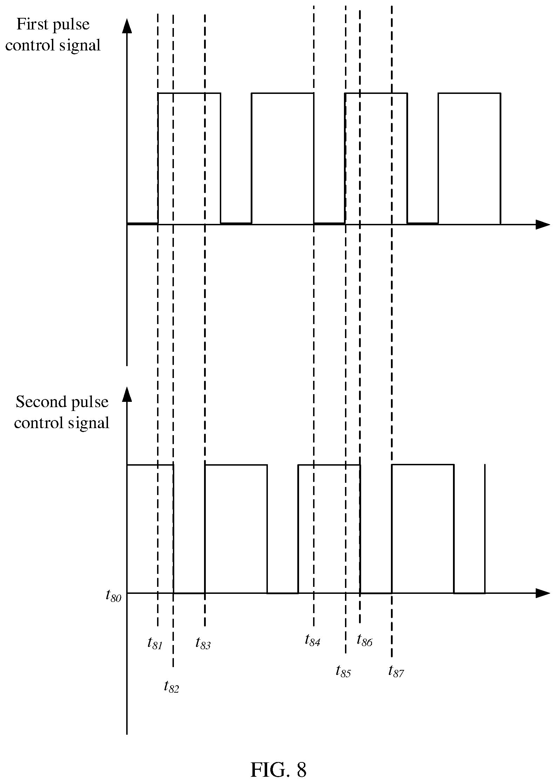

In some feasible implementations, FIG. 8 is another sequence diagram of a pulse control signal according to an embodiment of this application. As shown in FIG. 8, the duty ratios of the first pulse control signal and the second pulse control signal are greater than 0.5. Compared with the time sequence diagram of the pulse control signal shown in FIG. 5, it can be learned that an overlapped part in the time sequence diagram of the pulse control signal in FIG. 5 shows that both the first pulse control signal and the second pulse control signal are on a low level, while an overlapped part in the time sequence diagram of the pulse control signal in FIG. 8 shows that both the first pulse control signal and the second pulse control signal are on a high level. Therefore, with control of the sequence diagram of the pulse control signal shown in FIG. 5, switch tubes (for example, the switch tubes *Q*₃₁, *Q*₃₂, *Q*₃₃, and *Q*₃₄) of various switching units may all be in an off state, and with control of the sequence diagram of the pulse control signal shown in FIG. 8, the switch tubes *Q*₃₁, *Q*₃₂, *Q*₃₃, and *Q*₃₄ may all be in an on state.

In some feasible implementations, when a connection relationship in the internal structure of the switching unit is shown in FIG. 4A, with reference to the sequence diagram of the pulse control signal shown in FIG. 8, it is assumed that the alternating current output from the alternating current power supply is in a positive half cycle in a time period from *t*₈₀ to *t*₈₃, and the alternating current output from the alternating current power supply is in a negative half cycle in a time period from *t*₈₄ to *t*₈₇.

In a time period from *t*₈₀ to *t*₈₁, the first pulse control signal is on a low level, and the switch tube *Q*₃₁ and the switch tube *Q*₃₂ are off, while the second pulse control signal is on a high level, and the switch tube *Q*₃₃ and the switch tube *Q*₃₄ are on. In this case, an equivalent circuit diagram of the AC/DC converter is shown in FIG. 6C. For a specific implementation, refer to the descriptions in FIG. 6C. Details are not described herein again.

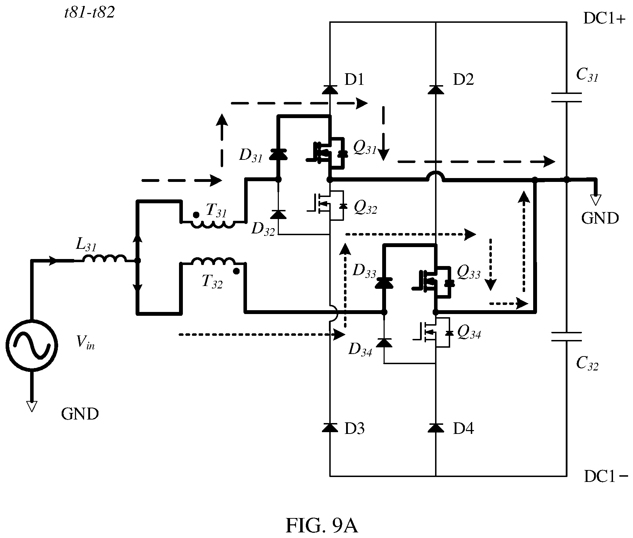

In a time period from *t*₈₁ to *t*₈₂, both the first pulse control signal and the second pulse control signal are on a high level, the switch tube *Q*₃₁ and the switch tube *Q*₃₂ are on, and the switch tube *Q*₃₃ and the switch tube *Q*₃₄ are on. In this case, an equivalent circuit diagram of the AC/DC converter is shown in FIG. 9A. The alternating current output from the alternating current power supply flows through the inductor *L*₃₁ and then flows through the winding *T*₃₁ and the winding *T*₃₂ separately. The current on the winding *T*₃₁ flows through the diode *D*₃₁ and the switch tube *Q*₃₁ to the ground cable GND of the AC/DC converter, and the inductor *L*₃₁ is charging; and the current on the winding *T*₃₂ flows through the diode *D*₃₃ and the switch tube *Q*₃₃ to the ground cable GND of the AC/DC converter, and the inductor *L*₃₁ is charging. A voltage difference between the positive bus DC+ and the negative bus DC- of the AC/DC converter is a voltage output within the time period from *t*₈₀ to *t*₈₁.

In a time period from *t*₈₂ to *t*₈₃, the first pulse control signal is on a high level, and the switch tube *Q*₃₁ and the switch tube *Q*₃₂ are on, while the second pulse control signal is on a low level, and the switch tube *Q*₃₃ and the switch tube *Q*₃₄ are off. In this case, an equivalent circuit diagram of the AC/DC converter is shown in FIG. 6A. For a specific implementation, refer to the descriptions in FIG. 6A. Details are not described herein again.

In a time period from *t*₈₄ to *t*₈₅, the alternating current is in the negative half cycle, the first pulse control signal is on a low level, and the switch tube *Q*₃₁ and the switch tube *Q*₃₂ are off, while the second pulse control signal is on a high level, and the switch tube *Q*₃₃ and the switch tube *Q*₃₄ are on. In this case, an equivalent circuit diagram of the AC/DC converter is shown in FIG. 6F. For a specific implementation, refer to the descriptions in FIG. 6F. Details are not described herein again.

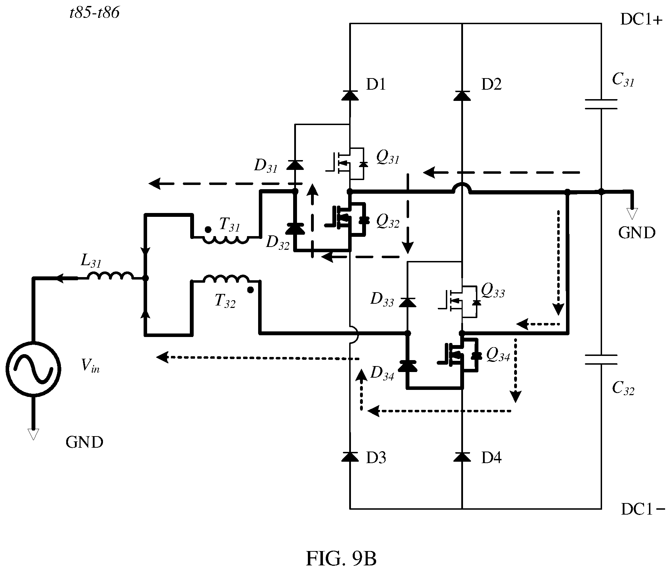

In a time period from *t*₈₅ to *t*₈₆, the alternating current is in the negative half cycle, both the first pulse control signal and the second pulse control signal are on a high level, the switch tube *Q*₃₁ and the switch tube *Q*₃₂ are on, and the switch tube *Q*₃₃ and the switch tube *Q*₃₄ are on. In this case, an equivalent circuit diagram of the AC/DC converter is shown in FIG. 9B. The current on the winding *T*₃₁ flows through the switch tube *Q*₃₂ and the diode *D*₃₂ to the ground cable GND of the AC/DC converter, and the inductor *L*₃₁ is charging; and the current on the winding *T*₃₂ flows through the switch tube *Q*₃₄ and the diode *D*₃₄ to the ground cable GND of the AC/DC converter, and the inductor *L*₃₁ is charging. The voltage difference between the positive bus DC+ and the negative bus DC- of the AC/DC converter is a voltage output within the time period from *t*₈₄ to *t*₈₅.

In a time period from *t*₈₆ to *t*₈₇, the alternating current is in the negative half cycle, the first pulse control signal is on a high level, the second pulse control signal is on a low level, the switch tube *Q*₃₁ and the switch tube *Q*₃₂ are on, and the switch tube *Q*₃₃ and the switch tube *Q*₃₄ are off. An equivalent circuit diagram of the AC/DC converter is shown in FIG. 6D, for a specific implementation, refer to the descriptions in FIG. 6D. Details are not described herein again.

Optionally, in some feasible implementations, when a connection relationship in the internal structure of the switching unit is shown in FIG. 4B, the time sequence diagram of the pulse control signal shown in FIG. 8 is still applicable. However, a current loop formed with the inductor *L*₃₁ varies at various moments.

For example, in the time period from *t*₈₀ to *t*₈₁, the switch tube *Q*₃₁ and the switch tube *Q*₃₂ are off, and the switch tube *Q*₃₃ and the switch tube *Q*₃₄ are on. In this case, an equivalent circuit diagram of the AC/DC converter is shown in FIG. 7C. For a specific implementation, refer to the descriptions in FIG. 7C. Details are not described herein again.

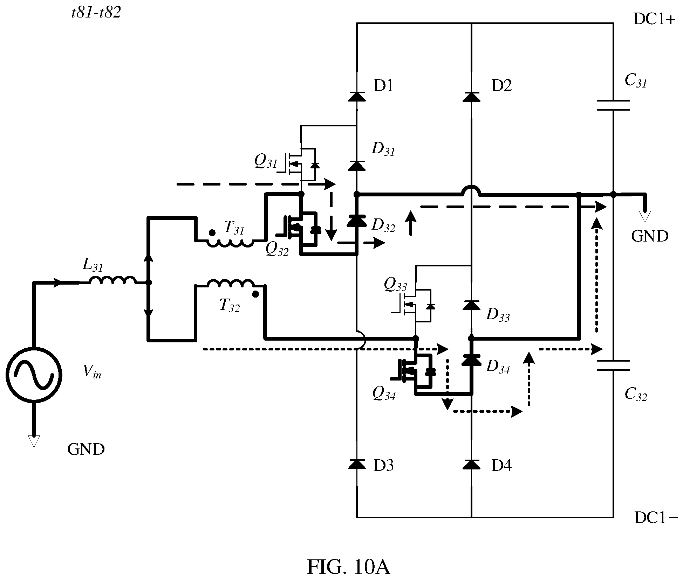

In the time period from *t*₈₁ to *t*₈₂, the switch tube *Q*₃₁ and the switch tube *Q*₃₂ are on, and the switch tube *Q*₃₃ and the switch tube *Q*₃₄ are on. In this case, an equivalent circuit diagram of the AC/DC converter is shown in FIG. 10A. The current on the winding *T*₃₁ flows through the switch tube *Q*₃₂ and the diode *D*₃₂ to the ground cable GND of the AC/DC converter, and the inductor *L*₃₁ is charging; and the current on the winding *T*₃₂ flows through the switch tube *Q*₃₄ and the diode *D*₃₄ to the ground cable GND of the AC/DC converter, and the inductor *L*₃₁ is charging. The voltage difference between the positive bus DC+ and the negative bus DC- of the AC/DC converter is a voltage output within the time period from *t*₈₀ to *t*₈₁.

In the time period from *t*₈₂ to *t*₈₃, the switch tube *Q*₃₁ and the switch tube *Q*₃₂ are on, and the switch tube *Q*₃₃ and the switch tube *Q*₃₄ are off. In this case, an equivalent circuit diagram of the AC/DC converter is shown in FIG. 7A. For a specific implementation, refer to the descriptions in FIG. 7A. Details are not described herein again.

In the time period from *t*₈₄ to *t*₈₅, the alternating current is in the negative half cycle, the switch tube *Q*₃₁ and the switch tube *Q*₃₂ are off, and the switch tube *Q*₃₃ and the switch tube *Q*₃₄ are on. In this case, an equivalent circuit diagram of the AC/DC converter is shown in FIG. 7F. For a specific implementation, refer to the descriptions in FIG. 7F. Details are not described herein again.

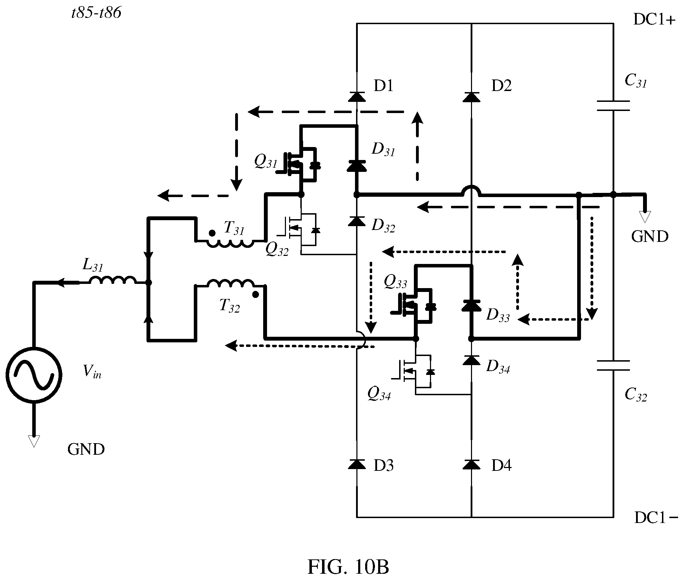

In the time period from *t*₈₅ to *t*₈₆, the alternating current is in the negative half cycle, the switch tube *Q*₃₁ and the switch tube *Q*₃₂ are on, and the switch tube *Q*₃₃ and the switch tube *Q*₃₄ are on. In this case, an equivalent circuit diagram of the AC/DC converter is shown in FIG. 10B. The current on the winding *T*₃₁ flows through the diode *D*₃₁ and the switch tube *Q*₃₁ to the ground cable GND of the AC/DC converter, and the inductor *L*₃₁ is charging; and the current on the winding *T*₃₂ flows through the diode *D*₃₃ and the switch tube *Q*₃₃ to the ground cable GND of the AC/DC converter, and the inductor *L*₃₁ is charging. The voltage difference between the positive bus DC+ and the negative bus DC- of the AC/DC converter is a voltage output within the time period from *t*₈₄ to *t*₈₅.

In the time period from *t*₈₆ to *t*₈₇, the alternating current is in the negative half cycle, the switch tube *Q*₃₁ and the switch tube *Q*₃₂ are on, and the switch tube *Q*₃₃ and the switch tube *Q*₃₄ are off. An equivalent circuit diagram of the AC/DC converter is shown in FIG. 7D, for a specific implementation, refer to the descriptions in FIG. 7D. Details are not described herein again.

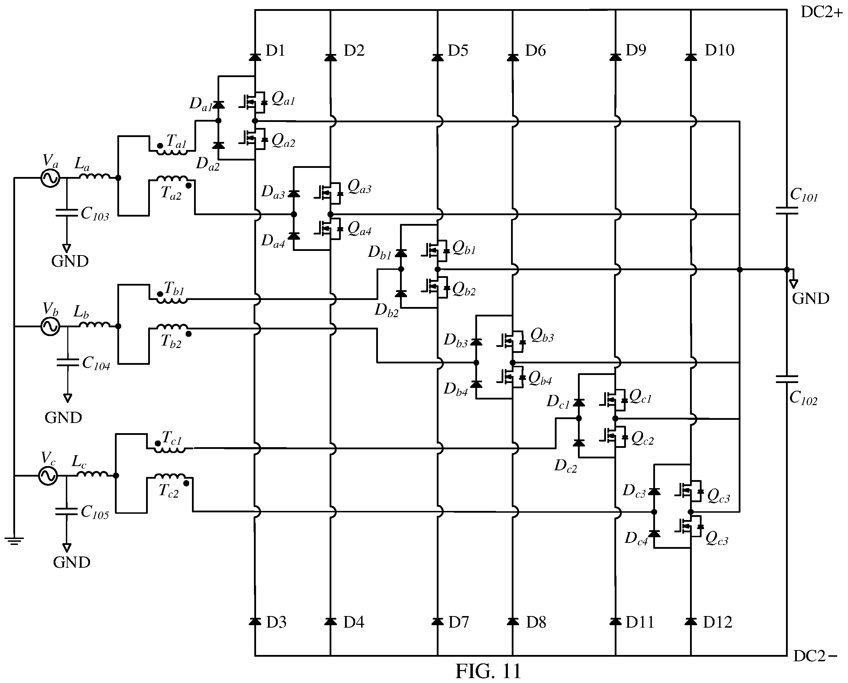

In some feasible implementations, FIG. 11 is a three-phase circuit diagram of an AC/DC converter according to an embodiment of this application. As shown in FIG. 11, the AC/DC converter includes a three-phase circuit, and a circuit of each phase includes an inductor, an autotransformer, a first switching unit, a second switching unit, a first rectifier unit, and a second rectifier unit. In other words, the AC/DC converter may include three phase circuits described in FIG. 3, where the switching unit may be specifically implemented as the circuit described in FIG. 4A or FIG. 4B.

In FIG. 11, an example in which the switching unit is specifically implemented as the circuit described in FIG. 4A is used, and an alternating current power supply is specifically implemented as an alternating current power grid, including three-phase voltages a, b, and c. A voltage of one phase is correspondingly input into a circuit of one phase.

It should be first noted that the AC/DC converter shown in FIG. 11 is applied to a three-phase three-wire circuit. The AC/DC converter provided in this embodiment of this application may alternatively be applied to a three-phase four-wire circuit, a three-phase five-wire circuit, or the like. This is not limited in this application.

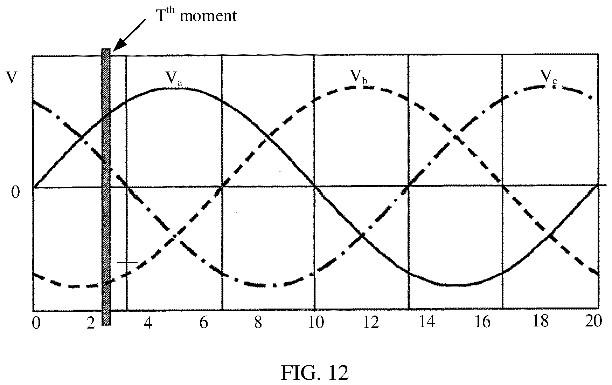

For a schematic diagram of waveforms of the three-phase voltages a, b, and c, refer to FIG. 12. A phase difference between the three-phase voltages a, b, and c is 120°. At different moments, a status of a circuit of each phase may be considered as an independent process. In the three-phase circuit, the AC/DC converter in this embodiment of this application may be in a plurality of states. For example, when the switching unit is specifically implemented as that in FIG. 4A, at a T^{th} moment shown in FIG. 12, the a-phase voltage and the c-phase voltage are in a positive half cycle, and the b-phase voltage is in a negative half cycle. In this case, circuits of phases corresponding to the a-phase voltage and the c-phase voltage (that is, a branch into which a voltage *Vₐ* is input and a branch into which a voltage *V_{c}* is input) may be in the foregoing three states with reference to FIG. 6A to FIG. 6C. A circuit of a phase corresponding to the b-phase voltage (that is, a branch into which a voltage *V_{b}* is input) may be in the foregoing three states with reference to FIG. 6D to FIG. 6F. Therefore, at the T^{th} moment, the AC/DC converter may have 27 possible combinations of loop states.

For example, both the branch into which the voltage *Vₐ* is input and the branch into which the voltage *V_{c}* is input form the loop shown in FIG. 6A, and the branch into which the voltage *V_{b}* is input forms the loop shown in FIG. 6D. A ground cable of an alternating current power grid is different from a ground cable GND of the AC/DC converter. Therefore, a current output from the alternating current power grid needs to return to the ground cable of the alternating current power grid. That is, the three-phase circuit complies with the Kirchhoffs circuit laws. Currents on the branch into which the voltage *Vₐ* is input and the branch into which the voltage *V_{c}* is input flow back to the ground cable of the alternating current power grid through the branch into which the voltage *V_{b}* is input. In other words, a sum of phasors of currents in the three-phase circuit is zero.

In a specific implementation, after being input into an inductor *Lₐ*, the voltage *Vₐ* flows through a winding *T*_{*a*1} and a winding *T*_{*a*2} separately. A current on the winding *T*_{*a*1} flows through a diode *D*_{*a*1} and a switch tube *Q*_{*a*1} to the ground cable GND of the AC/DC converter; and a current on the winding *T*_{*a*2} flows through a diode *D*_{*a*3}, a rectifier diode D2, and a first capacitor C₁₀₁ to the ground cable GND of the AC/DC converter.

After being input to an inductor *L_{c}*, the voltage *V_{c}* flows through a winding *T*_{c1} and a winding *T*_{*c*2} separately. A current on the winding *T*_{*c*1} flows through a diode *D*_{*c*1} and a switch tube *Q*_{*c*1} to the ground cable GND of the AC/DC converter; and a current on the winding *T*_{*c*2} flows through a diode *D*_{*c*3}, a rectifier diode D10, and the first capacitor *C*₁₀₁ to the ground cable GND of the AC/DC converter.

A current at the ground cable GND of the AC/DC converter may flow through a switch tube *Q*_{*b*2}, a diode *D*_{*b*2}, and a winding *T*_{*b*1} to the ground cable of the alternating current power grid, or may flow through a second capacitor *C*₁₀₂, a rectifier diode D8, a diode *D*_{*b*4}, and a winding *T*_{*b*2} to the ground cable of the alternating current power grid.

Optionally, both the branch into which the voltage *Vₐ* is input and the branch into which the voltage *V_{c}* is input form the loop shown in FIG. 6A, and the branch into which the voltage *V_{b}* is input forms the loop shown in FIG. 6E; both the branch into which the voltage *Vₐ* is input and the branch into which the voltage *V_{c}* is input form the loop shown in FIG. 6A, and the branch into which the voltage *V_{b}* is input forms the loop shown in FIG. 6F; the branch into which the voltage *Vₐ* is input form the loop shown in FIG. 6A, the branch into which the voltage *V_{c}* is input form the loop shown in FIG. 6B, and the branch into which the voltage *V_{b}* is input forms the loop shown in FIG. 6D; the branch into which the voltage *Vₐ* is input form the loop shown in FIG. 6A, the branch into which the voltage *V_{c}* is input form the loop shown in FIG. 6B, and the branch into which the voltage *V_{b}* is input forms the loop shown in FIG. 6E; or the branch into which the voltage *Vₐ* is input form the loop shown in FIG. 6A, the branch into which the voltage *V_{c}* is input form the loop shown in FIG. 6B, and the branch into which the voltage *V_{b}* is input forms the loop shown in FIG. 6F, or the like. Details are not described herein again.

It should be noted that the terms "first" and "second" are merely intended for a purpose of description, and shall not be understood as an indication or implication of relative importance.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An AC/DC converter, wherein the AC/DC converter is disposed between an alternating current power supply and power-consuming equipment, the AC/DC converter comprises a circuit of at least one phase, a circuit of each phase comprises an inductor, an autotransformer, a first switching unit, a second switching unit, at least two first rectifier units corresponding to the first switching unit, and at least two second rectifier units corresponding to the second switching unit, and the autotransformer comprises a first winding corresponding to the first switching unit and a second winding corresponding to the second switching unit;
one end of the inductor is coupled to the alternating current power supply, and the other end of the inductor is coupled to one end of the first winding and one end of the second winding;
the other end of the first winding is coupled to a winding connection end of the first switching unit, and the other end of the second winding is coupled to a winding connection end of the second switching unit;
a bus connection end of the first switching unit is coupled to a bus of the AC/DC converter through the at least two first rectifier units, a bus connection end of the second switching unit is coupled to the bus of the AC/DC converter through the at least two second rectifier units, and the bus of the AC/DC converter is coupled to the power-consuming equipment; and
at least two groups of switching circuits are comprised between the winding connection end of any one of the switching units and a ground cable connection end of the switching unit, wherein each group of switching circuits comprises a diode and a controllable switch connected in series to the diode, and the controllable switch is configured to control a connection or disconnection between the winding connection end and the ground cable connection end of the switching unit comprising the controllable switch.

2. The AC/DC converter according to claim 1, wherein the AC/DC converter further comprises a controller;
the controller is configured to send a first pulse control signal to a first controllable switch comprised in each group of switching circuits in the first switching unit, wherein the first pulse control signal is used to control on or off of the first controllable switch;
the controller is further configured to send a second pulse control signal to a second controllable switch comprised in each group of switching circuits in the second switching unit, wherein the second pulse control signal is used to control on or off of the second controllable switch; and
the first pulse control signal and the second pulse control signal have a same frequency, with a phase difference of 180°.

3. The AC/DC converter according to claim 1 or 2, wherein the at least two groups of switching circuits comprised in any one of the switching units comprise a first group of switching circuits and a second group of switching circuits, wherein the first group of switching circuits comprises a first diode and a first switch tube, the second group of switching circuits comprises a second diode and a second switch tube, and the bus of the AC/DC converter comprises a positive bus and a negative bus; and
both an anode of the first diode and a cathode of the second diode are coupled to the other end of the winding corresponding to the switching unit, both a cathode of the first diode and a first end of the first switch tube are coupled to the positive bus of the AC/DC converter by using one rectifier unit in the two rectifier units corresponding to the switching unit, both an anode of the second diode and a second end of the second switch tube are coupled to the negative bus of the AC/DC converter by using the other rectifier unit in the two rectifier units corresponding to the switching unit, and both a second end of the first switch tube and a first end of the second switch tube are coupled to a ground cable of the AC/DC converter.

4. The AC/DC converter according to claim 1 or 2, wherein the at least two groups of switching circuits comprised in any one of the switching units comprise a first group of switching circuits and a second group of switching circuits, wherein the first group of switching circuits comprises a third diode and a third switch tube, the second group of switching circuits comprises a fourth diode and a fourth switch tube, and the bus of the AC/DC converter comprises a positive bus and a negative bus; and
both a cathode of the third diode and a first end of the third switch tube are coupled to the positive bus of the AC/DC converter by using one rectifier unit in the two rectifier units corresponding to the switching unit, both a second end of the third switch tube and a first end of the fourth switch tube are coupled to the other end of the winding corresponding to the switching unit, both an anode of the fourth diode and a second end of the fourth switch tube are coupled to the negative bus of the AC/DC converter by using the other rectifier unit in the two rectifier units corresponding to the switching unit, and both an anode of the third diode and a cathode of the fourth diode are coupled to a ground cable of the AC/DC converter.

5. The AC/DC converter according to claim 3 or 4, wherein the AC/DC converter further comprises a first capacitor and a second capacitor, wherein
the first capacitor is coupled between the positive bus of the AC/DC converter and the ground cable of the AC/DC converter, and the second capacitor is coupled between the negative bus of the AC/DC converter and the ground cable of the AC/DC converter.

6. The AC/DC converter according to any one of claims 1 to 5, wherein the AC/DC converter comprises a three-phase circuit, and a sum of phasors of currents in the three-phase circuit is zero.

7. The AC/DC converter according to any one of claims 2 to 6, wherein the controller is further configured to control duty ratios of the first pulse control signal and the second pulse control signal to be less than 0.5 when a voltage of the alternating current power supply is less than a half of an output voltage of the AC/DC converter; or
the controller is further configured to control duty ratios of the first pulse control signal and the second pulse control signal to be greater than 0.5 when a voltage of the alternating current power supply is greater than a half of an output voltage of the AC/DC converter.

8. The AC/DC converter according to any one of claims 1 to 7, wherein winding turns of the first winding and the second winding are equal.

9. A charging apparatus, wherein the charging apparatus comprises the AC/DC converter according to any one of claims 1 to 8 and an electric meter, and the electric meter is connected in series between an alternating current power supply and the AC/DC converter; and
the AC/DC converter is configured to: convert an alternating current output from the alternating current power supply into a first direct current, and transmit the first direct current to power-consuming equipment, and the electric meter is configured to measure electric energy supplied by the alternating current power supply to the power-consuming equipment.

10. The charging apparatus according to claim 9, wherein the charging apparatus further comprises a DC/DC converter, and the DC/DC converter is disposed between the AC/DC converter and the power-consuming equipment; and
the AC/DC converter transmits, via the DC/DC converter to the power-consuming equipment, the first direct current obtained by converting the alternating current output from the alternating current power supply, and the DC/DC converter is configured to convert the first direct current to obtain a second direct current, and supply the second direct current to the power-consuming equipment.
